# EUROPÄISCHE PATENTSCHRIFT

(11) **EP 1 070 362 B1**
(45) Veröffentlichungstag und Bekanntmachung des Hinweises auf die Patenterteilung: **18.12.2002**
(21) Anmeldenummer: 99924789.3
(22) Anmeldetag: 01.04.1999
(51) Int. Cl.: H01M 8/02, H01M 8/24

(54) **BIPOLARE PLATTE MIT PORÖSER WAND EINES BRENNSTOFFZELLENSTAPELS**
BIPOLAR PLATE WITH POROUS WALL FOR A FUEL CELL STACK
PLAQUE BIPOLAIRE A PAROI POREUSE D'UN EMPILEMENT DE CELLULES ELECTROCHIMIQUES

(30) Priorität: 08.04.1998 DE 19815796
(43) Veröffentlichungstag der Anmeldung: 24.01.2001
(73) Patentinhaber: Forschungszentrum Jülich GmbH, 52425 Jülich (DE)
(72) Erfinder: DE HAART, Lambertus, NL-6414 JE Heerlen (NL); MEUSINGER, Josefin, D-65474 Bischofsheim (DE)
(86) Internationale Anmeldenummer: DE9901057
(87) Internationale Veröffentlichungsnummer: WO99053558

(56) Entgegenhaltungen:
- EP-A- 0 297 315
- EP-A- 0 817 297
- DE-A- 4 120 359
- US-A- 5 643 690

## Beschreibung

Die Erfindung betrifft ein Verfahren zur Kontaktierung eines metallischen verbindenden Elements und einer Anode für eine Brennstoffzelle. Die Erfindung betrifft ferner einen Brennstoffzellenstapel, der eine solche Kontaktierung aufweist.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C beträgt. An der Kathode einer Hochtemperaturbrennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Die Betriebstemperatur einer PEM-Brennstoffzelle liegt bei ca. 80° C. An der Anode einer PEM-Brennstoffzelle bilden sich in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt.

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt.

Aus der Druckschrift DE 195 198 47 C1 ist bekannt, Brennstoff wie Methan intern, das heißt unmittelbar an der Anode einer SOFC-Brennstoffzelle zu reformieren. Eine Methan-Dampf-Reformierungsreaktion verläuft stark endotherm (ΔH = 227.5 kJ/mol bei 1000°C) und entzieht der Umgebung entsprechend Wärme. Die Reaktionsrate der Reformierungsreaktion ist im allgemeinen sehr groß im Vergleich zur nachfolgenden elektrochemischen Reaktion. Bei einer internen Reformierung kann bereits innerhalb einer Strecke von 10 mm nach Gaseintritt in den Anodenraum (Raum in dem sich die Anode befindet) die Reformierungsreaktion komplett abgelaufen sein. Die innerhalb dieser kurzen Strecke benötigte Wärme kann durch die wesentlich langsamere elektrochemische Reaktion nicht ausreichend nachgeliefert werden, so daß bei einer internen Reformierung regelmäßig ein Temperatureinbruch entsteht. Ungleichmäßige Temperaturverteilungen und hiermit einhergehende, zerstörerisch wirkende thermische Spannungen sind die Folge.

Um das Problem zu vermindern, werden gemäß der Druckschrift DE 195 198 47 C1 Katalysatorkonzentrationen im Anodenraum geeignet reduziert, so daß die Methan - Dampf - Reformierungsreaktion verzögert abläuft.

In der Druckschrift DE 197 10 345 wird beschrieben, daß zwischen einer Elektrode einer Hochtemperaturbrennstoffzelle und der angrenzenden bipolaren Platte eine glashaltige Paste vorzusehen ist, um von unebenen Oberflächen herrührende Kontaktierungsprobleme zu vermindern.

Aus der Druckschrift DE 195 47 700 A1 ist bekannt, Elektrodenräume innerhalb einer selbsttragenden, aus einem Cermet bestehenden Elektrode anzuordnen. Auf diese Weise soll der Weg eines Betriebsmittels vom Elektrodenraum zur katalytisch aktiven Schicht kurz gehalten werden.

Weiterhin sind aus EP 0817297 A Brennstoffzellen bekannt, die neben bipolaren Platten auch Distributoren sowie Stromkollektoren aufweisen. Die Stromkollektoren weisen eine erhebliche Porosität auf, die den Fluß von Reaktanden gestattet und stehen ferner im Kontakt mit den jeweiligen Elektroden. Sie können aus dem gleichen Material wie die Gasdistributoren hergestellt sein.

Aufgabe der Erfindung ist die Schaffung eines effektiven Kontaktes zwischen einem metallischen verbindenden Element und einer angrenzenden Elektrode in einer Brennstoffzelle. Aufgabe der Erfindung ist es ferner, einen Brennstoffzellenstapel zur Verfügung zu stellen, der eine besonders gute und effektive Kontaktierung zwischen einem metallischen verbindenden Element und einer angrenzenden Elektrode aufweist.

Die Aufgabe wird durch ein Verfahren mit den Merkmalen des Hauptanspruchs sowie durch eine Vorrichtung mit den Merkmalen des Nebenanspruchs gelöst. Vorteilhafte Ausgestaltungen ergeben sich aus den rückbezogenen Ansprüchen.

Das zu kontaktierende verbindende Element weist eine poröse Wand auf, die den Elektrodenraum, von dem aus Brennstoff zur Elektrode gelangt, von der Elektrode trennt. Eine Elektrode ist mit der porösen Wand verbunden.

Das verbindende Element besteht bis auf Schweiß- oder Lötverbindungen im wesentlichen aus einem Metall oder aus verwandten Metallen, so zum Beispiel aus Metallen mit vergleichbaren physikalischen und chemischen Eigenschaften.

Eine Elektrode wird auf der porösen Schicht des verbindenden Elementes hergestellt. Zum Beispiel erfolgt die Herstellung durch Aufgießen einer Suspension, die das Elektrodenmaterial in Pulverform enthält. Das Elektrodenmaterial scheidet sich schichtförmig auf dem verbindenden Element ab. Es wird dann getrocknet und gesintert.

Durch die Herstellung der Elektrode auf dem verbindenden Element ergeben sich keine Kontaktierungsprobleme, die auf unebene Oberflächen zurückzuführen sind.

In einer vorteilhaften Ausgestaltung handelt es sich bei der Elektrode um eine Anode. Die Anode weist einen Katalysator auf, der eine Reformierung oder Oxidation von Brennstoff bewirkt.

Die trennende poröse Wand bewirkt eine Hemmung der Diffusion von Betriebsmittel zur katalytisch aktiven Schicht. Es gelangt nur ein Teil des Brennstoffs im Eingangsbereich des betreffenden Elektrodenraums unmittelbar zur Anode. Folglich kann sich der zu reformierende Brennstoff gleichmäßig im Elektrodenraum verteilen. Lokales Abkühlen wird so vermieden.

Die Porosität der trennenden porösen Wand des verbindenden Elementes beträgt bevorzugt 20 bis 60%, um die vorgenannte Wirkung zu erzielen.

Vorteilhaft besteht das verbindende Element aus einem Metall und zwar insbesondere aus einer Eisen-Chrom-Legierung, so zum Beispiel aus der Legierung mit der Werkstoffnummer 1.4742. Ein solches verbindendes Element kann bei hohen Temperaturen oberhalb von 500 °C eingesetzt werden. Das verbindende Element kann aus verschiedenen Bauteilen zusammengesetzt sein, die miteinander verlötet oder verschweißt sind. Eine solche Verbindung ist stabiler und einfacher Herzustellen als die eingangs genannte Verbindung mit einer glashaltigen Paste.

In einer vorteilhaften Ausgestaltung besteht die Elektrode aus einem Cermet, um diese bei hohen Temperaturen oberhalb von 500 °C einsetzen zu können.

Unter der Herstellung einer Elektrode auf der porösen Wand ist zu verstehen, daß ein Vorkörper der Elektrode auf die poröse Wand aufgebracht wird und durch eine anschließende Behandlung aus dem Vorkörper die Elektrode entsteht.

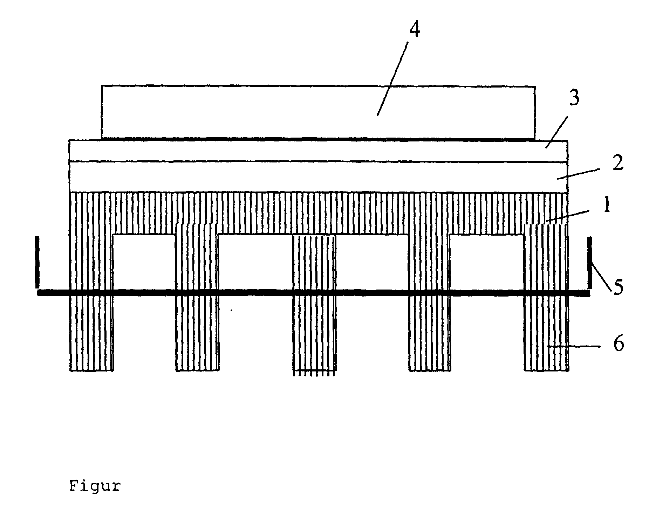

Die Figur zeigt eine Ausführungsform des anspruchsgemäßen verbindenden Elementes (bipolare Platte) mit einer angrenzenden Elektroden-Elektrolyt-Einheit.

Ein Bauteil 1 besteht aus einer porösen, temperaturbeständigen Legierung mit durchgehenden Poren (offene Porosität) Die Porosität beträgt 20 bis 60%. Die Größe der Poren liegt bei 0,1 - 10 µm. Es ist im Schnitt ähnlich wie ein Kamm aufgebaut. Auf der flachen Seite (ohne die Kammstruktur) des Bauteils 1 ist zunächst eine ca. 10 µm dicke Anode 2 aufgebracht worden.

Auf die flache Seite wird zur Aufbringung der Anode eine Suspension gegossen, die die folgenden Eigenschaften aufweist:
- die Suspension weist grobe und feine aus Elektrodenmaterial bestehende Feststoffanteile auf,
- der maximale Durchmesser der groben Feststoffanteile ist gleich der minimalen Porengröße in der flachen Schicht,
- die feinen Feststoffanteile sind 5- bis 12-fach kleiner als die groben Feststoffanteile,
- der Anteil der groben Feststoffanteile in der Suspension beträgt 3-10 Vol.-%.

Das verbindende Element mit der aufgegossenen Suspension wird getrocknet und gesintert.

Auf die Anode 2 wird eine ca. 10 bis 15 µm dicke, gasdichte Elektrolytschicht 3 in der vorgenannten Weise aufgebracht.

Auf die Elektrolytschicht 3 wird insbesondere durch Aufspritzen, Trocknen und Sintern einer Suspension eine circa 50 µm dicke Kathodenschicht 4 aufgebracht.

Die Anode besteht zum Beispiel aus einem Nickelcermet. Die Elektrolytschicht besteht beispielsweise aus yttriumstabilisiertem Zirkoniumoxid (YSZ). Die Kathode besteht beispielsweise aus Sr dotiertem LaMnO₃.

Auf der Kammstruktur des Bauteils 1 ist ein Blech 5 angelötet oder angeschweißt worden. Das Blech 5 trennt den Anodenraum gasdicht vom Kathodenraum. Es kann seitlich in der gezeigten Weise aus der bipolaren Platte herausragen und umgebogen sein. Auf diese Weise kann es zur gasdichten Abtrennung des Elektrodenraumes beitragen.

Das Blech 5 besteht insbesondere aus derselben Legierung wie das Bauteil 1. Streifen 6 sind wiederum auf das Blech 5 aufgelötet oder -geschweißt worden. Sie dienen der Gasverteilung im entsprechenden Kathodenraum. Die Streifen 6 bestehen aus demselben Material wie das Bauteil 1 und sind ebenfalls porös.

Sind die Streifen 6 ebenfalls porös, so kann ein Betriebsmittel in verbesserter Weise auch in die Bereiche einer Elektrode vordringen, die an die Streifen 6 angrenzen.

Das verbindende Element besteht aus einem Werkstoff. Thermische bedingte Dehnungen sind gleich. Es treten daher keine zerstörerisch wirkende Spannungen auf. Der metallische Werkstoff ist einfach zu bearbeiten und weist erwünscht ein hohe elektrische und thermische Leitfähigkeit auf. Die gute Wärmeleitfähigkeit des Materials fördert eine gleichmäßige Temperaturverteilung. Durch das Schweißen oder Löten werden widerstandsfreie Übergänge erhalten. Aufeinander abgestimmte Geschwindigkeiten bei der Methan - Dampf- Reformierung und der Brenngas-Oxidation (elektrochemische Reaktion) sind durch die Gasdiffusionsbarriere möglich.

## Patentansprüche

1. Verfahren zur Kontaktierung eines metallischen verbindenden Elements (1, 5, 6) mit einer Anode (2) für die Verwendung in einer Brennstoffzelle mit den Schritten
- auf eine poröse Wand (1) des metallischen verbindenden Elements wird eine Suspension, die das Anodenmaterial in Pulverform enthält aufgegossen,
- die Suspension wird anschließend getrocknet und gesintert, so daß eine mit dem verbindenden Element elektrisch und mechanisch verbundene Anode gebildet wird.

2. Brennstoffzellenstapel mit mehreren Brennstoffzellen, wobei jede Brennstoffzelle eine Kathode (4), eine Anode (2) und einer zwischen Anode und Kathode befindliche Elektrolytschicht (3) aufweist, und wobei die Anode (2) einen Katalysator zur Reformierung oder zur Oxidation von Brennstoff aufweist, und jeweils zwei Brennstoffzellen durch ein verbindendes Element (1, 5, 6) aus Metall oder einer Metallegierung elektrisch und mechanisch miteinander verbunden sind,
**dadurch gekennzeichnet,**
**daß** jedes verbindende Element eine poröse Wand (1) aufweist, die direkt an eine Anode (2) angrenzt, und diese Anode (2) jeweils direkt auf der porösen Wand (1) nach einem Verfahren gemäß Anspruch 1 hergestellt ist.

3. Brennstoffzellenstapel nach vorhergehendem Anspruch, **dadurch gekennzeichnet, daß** wenigstens eine Elektrode aus Cermet besteht.

4. Brennstoffzellenstapel nach Anspruch 2 oder 3,
**dadurch gekennzeichnet, daß**
die verbindenden Elemente aus mehreren Bauteilen (1, 5, 6) zusammengesetzt sind, die miteinander verschweißt oder verlötet sind.

## Claims

1. A method of placing a metallic connecting element (1, 5, 6) in contact with an anode (2) for use in a fuel cell, comprising the following steps:
- a suspension which contains the anode material in the form of a powder is poured on to a porous wall (1) of the metallic connecting element,
- the suspension is subsequently dried and sintered so that an anode is formed which is electrically and mechanically connected to the connecting element.

2. A fuel cell stack comprising a plurality of fuel cells, wherein each fuel cell comprises a cathode (4), an anode (2) and an electrolyte layer (3) situated between the anode and the cathode, and wherein the anode (2) comprises a catalyst for reforming or for the oxidation of fuel, and each two fuel cells are electrically and mechanically connected to each other by a connecting element (1, 5, 6) made of metal or a metal alloy,
**characterised in that**
each connecting element comprises a porous wall (1) which directly adjoins an anode (2), and each anode (2) is produced directly on the porous wall (1) by a method according to claim 1.

3. A fuel cell stack according to the preceding claim, **characterised in that** at least one electrode consists of a cermet.

4. A fuel cell stack according to claims 2 or 3, **characterised in that** the connecting elements are composed of a plurality of components (1, 5, 6) which are welded or soldered to each other.

## Revendications

1. Procédé pour établir le contact entre un élément (1, 5, 6) métallique de liaison et une anode (2) pour l'utilisation dans une pile à combustible comprenant l'étape qui consiste
- à couler sur une paroi (1) poreuse de l'élément métallique de liaison une suspension qui contient la matière d'anode sous la forme de poudre,
- à sécher et à fritter ensuite la suspension de manière à former une anode reliée électriquement et mécaniquement à l'élément de liaison.

2. Empilement de piles à combustible comprenant plusieurs piles à combustible, chaque pile à combustible ayant une cathode (4), une anode (2) et une couche (3) d'électrolyte se trouvant entre l'anode et la cathode et l'anode (2) ayant un catalyseur de reformage ou d'oxydation du combustible et respectivement deux piles à combustible étant reliées électriquement et mécaniquement entre elles par un élément (1, 5, 6) de liaison en métal ou en un alliage métallique, **caractérisé en ce que** chaque élément de liaison a une paroi (1) poreuse qui est directement adjacente à une anode (2) et cette anode (2) est fabriquée respectivement directement sur la paroi (1) poreuse par un procédé suivant la revendication 1.

3. Empilement de piles à combustible suivant la revendication précédente, **caractérisé en ce qu'**au moins une électrode est en cermet.

4. Empilement de piles à combustible suivant la revendication 2 ou 3, **caractérisé en ce que** les éléments de liaison sont composés de plusieurs pièces (1, 5, 6) qui sont soudées ou qui sont brasées entre elles.
